# EUROPÄISCHE PATENTSCHRIFT

(11) **EP 3 700 873 B1**
(45) Veröffentlichungstag und Bekanntmachung des Hinweises auf die Patenterteilung: **09.10.2024**
(21) Anmeldenummer: 18789406.8
(22) Anmeldetag: 18.10.2018
(51) Int. Cl.: C04B 28/14, C04B 38/10

(54) **DISALZ ALS ROBUSTES PRIMÄRTENSID FÜR CALCIUMSULFATMISCHUNGEN, DIE SILOXAN-HALTIGEN RECYCLING-GIPS ENTHALTEND**
DI-SALT AS ROBUST PRIMARY SURFACTANT FOR CALCIUM SULPHATE MIXTURES CONTAINING SILOXAN-COMPRISING RECYCLING GYPSUM
DISEL EN TANT QU'AGENT TENSIO-ACTIF PRIMAIRE ROBUSTE POUR MÉLANGES DE SULFATE DE CALCIUM CONTENANT DES GYPSES RECYCLÉS CONTENANT DU SILOXAN

(30) Priorität: 24.10.2017 EP 17198015
(43) Veröffentlichungstag der Anmeldung: 02.09.2020
(73) Patentinhaber: BASF SE, 67056 Ludwigshafen am Rhein (DE); SAINT-GOBAIN PLACO, 92400 Courbevoie (FR)
(72) Erfinder: GEHRIG, Uwe, 83308 Trostberg (DE); NIEDERMAIR, Fabian, 83308 Trostberg (DE); DENGLER, Joachim, 83308 Trostberg (DE); DAXENBERGER, Georg, 83308 Trostberg (DE); JAFFEL, Hamouda, 93600 Aulnay-sous-Bois (FR)
(74) Vertreter: Maiwald GmbH
(86) Internationale Anmeldenummer: PCT/EP2018/078575
(87) Internationale Veröffentlichungsnummer: WO 2019/081344

(56) Entgegenhaltungen:
- EP-A1- 2 796 436
- EP-A1- 2 990 026
- WO-A1-2015/051822
- WO-A1-99/58466
- DE-A1- 4 300 660
- DE-T2- 69 913 951
- US-A1- 2004 026 002

## Beschreibung

Die vorliegende Erfindung betrifft eine Gips-Zusammensetzung, welche Recyclinggips und einen Schaumbildner enthält, welcher mindestens ein alpha- Sulfofettsäuredisalz umfasst, ein Verfahren zu deren Herstellung sowie einen Artikel, welcher die erfindungsgemäße Gips-Zusammensetzung enthält. Des Weiteren betrifft die vorliegende Erfindung die Verwendung eines Schaumbildners, welcher mindestens ein alpha- Sulfofettsäuredisalz umfasst, zur Verminderung der Nassdichte einer wässrigen Gips-Zusammensetzung, welche einen Recyclinggips-Anteil von mindestens 0,5 Gew.-% aufweist.

In der Bauindustrie werden vielerlei verschiedene gipshaltige Baustoffe verwendet. Die gipshaltigen Baustoffe umfassen Gipse wie Stuckgipse, Mörtelgipse, Maschinengipsputze, Putzgipse, Haftgipse, Fugengipse, Spachtelgipse, Isoliergipse, Estrichgipse, Fertigputzgipse und Marmorgipse. Die gipshaltigen Baustoffe umfassen außerdem gipshaltige Fertigbauteile wie Gipskartonplatten, Gipsfaserplatten, gipshaltige Wandbauplatten, vliesummantelte Gipsplatten und gipshaltige Formkörper.

In der Gipsindustrie sind die Hersteller verpflichtet, Recyclinggipsmaterial wieder in den Produktionsprozess zurückzuführen. Hierunter sind gipshaltige Bau- und Abbruchabfälle zu verstehen, wobei es sich insbesondere um Gipsplatten (Gipskartonplatten, Gipsfaserplatten, Vollgipsplatten) handelt. Gipsplattenabfälle fallen beispielsweise als Verschnitt in der Gipskartonplattenproduktion oder beim Neubau von Gebäuden sowie Renovierungs- und Abbrucharbeiten an.

Ein Problem bei der Recyclinggipsverwertung besteht jedoch darin, dass die Qualität des Materials aufgrund der in Gipsplattenabfällen enthaltenen Additive sehr variabel ist. Beispielsweise enthalten hydrophobierte Gipskartonplatten, die für den Feuchtraumausbau verwendet werden, Anteile an Siloxanen, welche sehr stark entschäumend wirken. Bei der Produktion von Gipskartonplatten wird dem Gipsbrei vorgenerierter Schaum zugeführt, um die Dichte des Produktes zu verringern. Daher ist die Anwesenheit von siloxan-haltigem Recyclinggips in der Produktion von Gipskartonplatten aufgrund der entschäumenden Wirkung oft von großem Nachteil.

Daher besteht ein Bedarf an Gips-Zusammensetzungen, welche sich unabhängig von der enthaltenen Menge und Qualität an Recyclinggipsmaterial effektiv aufschäumen lassen.

EP 2 796 436 A1 beschreibt einen schaumigen Gipsbrei der Frischdichte 970±20 kg/m³, erhalten durch Mischen von 964,6 g wässrige Zusammensetzung bestehend aus 24 g AKD-Dispersion (Alkylketendimer als Hydrophober), 336,7 g Wasser, 3 g Melflux PCE 1493 L, 600 g Gips, 0,9 g Beschleuniger und 36,5 g Fettalkylethersulfat-basierten Schaum mit einer Dichte von 75 g/l. Allerdings enthält der Gipsbrei von EP 2 796 436 A1 kein Recyclinggips.

WO 2015/051822 A1 beschreibt die Herstellung leichtgewichtiger siloxan-hydrophobierter Gipsplatten aus einem geschäumten Gipsbrei, in welchen Abfallstäube und gemahlene Abfälle von siloxan-haltigen Gipsplatten rückgeführt wurden. Die Menge an Rückführgut beträgt bevorzugt 2,4-3 g/m² im Falle einer Platte der Dicke 12,5 mm. Während WO 2015/051822 A1 erkennt, dass der Rezyklatstaub eine Auswirkung auf die Porengröße dees Gipsbreis hat, wird weder Art noch Menge des Schaumbildners, offenbart.

US 2004/026002 A1 beschreibt den Einsatz von "Thatcher" Schaummittel zur Herstellung von Gipsplatten aus einem Gipsbrei, der 1330 Ibs Gips, ggf. 200 Ibs Rezyklatstaub, 650 Ibs Wasser, 1,2 Ibs Schaumbildner und weitere Bestandteile enthält. Allerdings gibt es in US 2004/026002 A1 keine Hinweise auf siloxan-haltigen Recycling-Gips, Probleme, die damit entstehen, sowie mögliche Lösungen.

Aufgabe der vorliegenden Erfindung war es demzufolge, eine Gips-Zusammensetzung bereitzustellen, welcher siloxan-haltiger Recyclinggips zugefügt werden kann, ohne die Schaumeffizienz zu beeinträchtigen.

Gelöst wurde diese Aufgabe durch eine wässrige Gips-Zusammensetzung, umfassend
i) mindestens 40,0 Gew.-% Gips, und
ii) mindestens 0,002 Gew.-%, vorzugsweise mindestens 0,005 Gew.-% eines Schaumbildners, welcher mindestens ein alpha-Sulfofettsäuredisalz umfasst,

bezogen auf das Gesamtgewicht der Gips-Zusammensetzung,
wobei der Gips einen Recyclinggips-Anteil von mindestens 0,5 Gew.-% aufweist, bezogen auf den Gesamtanteil an Gips in der Gips-Zusammensetzung,
dadurch gekennzeichnet, dass es sich bei dem Recyclinggips Anteil um Siloxan-haltigen Recyclinggips handelt.

Überraschend hat sich hierbei herausgestellt, dass vor allem Disalz-Tensidstrukturen, insbesondere alpha-Sulfofettsäuredisalze, gegenüber Siloxan-haltigen Materialien robust wirken, wodurch die schaumzerstörende Wirkung der Siloxane stark gemindert ist. Unabhängig vom Recyclinggips-Anteil bleibt die Schaumausbeute bei Verwendung von auf alpha-Sulfofettsäuredisalzen basierenden Schäumen bei der Gipsplattenherstellung nahezu konstant.

Somit handelt es sich in der vorliegenden Erfindung bei dem Recyclinggips Anteil um Siloxan-haltigen Recyclinggips.

Gemäß einer bevorzugten Ausführungsform der vorliegenden Erfindung handelt es sich bei dem mindestens einen alpha-Sulfofettsäuredisalz um eine Verbindung der Formel (I)

R¹CH(SO₃M¹)COOM² (I),

wobei R¹ ein linearer oder verzweigter Alkyl- oder Alkylenrest mit 6 bis 16 C-Atomen ist und M¹ und M² unabhängig voneinander für H, Li, Na, K, Ca/2, Mg/2, Ammonium oder Alkanolamin stehen.

Bevorzugt ist R¹ ein linearer Alkylrest mit 8 bis 16 C-Atomen.

Besonders bevorzugt stehen M¹ und M² für Na.

Gemäß einer weiteren Ausführungsform der vorliegenden Erfindung enthält die Zusammensetzung weiterhin mindestens 0,005 Gew.-%, bevorzugt mindestens 0,002 Gew.-% mindestens eines von alpha-Sulfofettsäuredisalzen verschiedenen Co-Tensids.

Besonders bevorzugt ist das mindestens eine Co-Tensid ausgewählt aus der Gruppe bestehend aus Alkylpolyglycosiden, Alkylamidobetainen, Glutamaten, Sulfoketonen, Sulfaten, (u.a. Alkylsulfaten, Alkylethersulfaten) Isenthionaten, N-Acyl-Aminosäure-Verbindungen, Sulfoacetaten, Sulfonaten, Sulfosuccinaten, Tauraten, Betainen, Amphotensiden, Alkanolamiden, Aminoxiden, Carboxylaten, Alkylethoxylaten, Kationtensiden, kationischen Polymeren, Proteinhydrolysaten, Siliconen, Fettalkoholen, Protein-Derivaten, Bleichen von Disalzen, nicht ionischen Tensiden sowie Gemischen von diesen.

Gemäß einer weiteren Ausführungsform der vorliegenden Erfindung enthält die Zusammensetzung weiterhin mindestens ein Lösungsmittel.

Gemäß einer weiteren bevorzugten Ausführungsform der vorliegenden Erfindung enthält die Zusammensetzung ein oder mehrere Additive ausgewählt aus der Gruppe bestehend aus Celluloseethern, Löschkalk, Stärke, modifizierter Stärke, Hydrophobierungsmitteln, mineralischen Additiven, Aggregaten mit geringer Dichte, Fasern, Beschleunigern, Verdickungsmitteln, Verzögerern, Luftporenbildnern, Schäumungsmitteln, Quellmitteln, Füllstoffen, Polyacrylaten, Dispersionsmitteln, Fließmitteln, Suberabsorbern und Stabilisatoren.

Gemäß einer bevorzugten Ausführungsform der vorliegenden Erfindung umfassend die Gips-Zusammensetzung weiterhin 0,0001 bis 1,0 Gew.-% eines Verzögerers und/oder 0,01 bis 2,0 Gew.-% eines Fließmittels.

Die vorliegende Erfindung betrifft außerdem einen Artikel, hergestellt aus der oben beschriebenen Gips-Zusammensetzung.

Es ist insbesondere bevorzugt, dass es sich bei dem Artikel um gipshaltige Fertigbauteile wie Gipskartonplatten, Gipsfaserplatten, gipshaltige Wandbauplatten, vliesummantelte Gipsplatten und gipshaltige Formkörper handelt.

Des Weiteren betrifft die vorliegende Erfindung ein Verfahren zur Herstellung einer wässrigen Gips-Zusammensetzung wie vorangehende definiert, umfassend
a) Bereitstellung eines Schaums aus einem Schaumbildner, welcher mindestens ein alpha-Sulfofettsäuredisalz umfasst,
b) Bereitstellung einer Zusammensetzung umfassend Wasser, Gips und optional Additive,
c) Einwirken von Scherkräften auf die in Schritt b) erhaltene Zusammensetzung unter Zugabe des Schaums aus Schritt a).

Außerdem betrifft die vorliegende Erfindung die Verwendung eines Schaumbildners, welcher mindestens ein alpha-Sulfofettsäuredisalz umfasst, zur Verminderung der Nassdichte einer wässrigen Gips-Zusammensetzung, welche einen Recyclinggips-Anteil von mindestens 0,5 Gew.-% aufweist, bezogen auf den Gesamtanteil an Gips in der Zusammensetzung.

Es ist insbesondere bevorzugt, dass es sich bei dem mindestens einem alpha-Sulfofettsäuredisalz um eine der oben genannten Verbindungen handelt.

Im Folgenden wird die vorliegende Erfindung genauer beschrieben.

Wie oben erläutert, enthält die erfindungsgemäße Zusammensetzung Gips, welcher einen Recyclinggips-Anteil von mindestens 0,5 Gew.-% aufweist.

Im Rahmen der vorliegenden Erfindung bezieht sich der Begriff "Gips" auf die Verbindung Calciumsulfat in ihrer wasserfreien oder hydratisierten Form wie beispielsweise Gipsgestein, bestehend aus dieser Verbindung in kristalliner Form, sowie das entsprechende Baumaterial wie Calciumsulfat Hemihydrat, Dihydrat oder Anhydrit der Formel CaSO₄ · x H₂O, wobei x 0, ½ oder 2 ist, oder Gemische aus diesen.

Die erfindungsgemäße Gips-Zusammensetzung enthält mindestens 40,0 Gew.-%, mehr bevorzugt 45,0 bis 70,0 Gew.-%, besonders bevorzugt 50,0 bis 65,0 Gew.-% Gips, bezogen auf das Gesamtgewicht der Gips-Zusammensetzung.

Der Recyclinggips-Anteil des erfindungsgemäß verwendeten Gips beträgt mindestens 0,5 Gew.-%, mehr bevorzugt mindestens 2,0 Gew.-%, besonders bevorzugt mindestens 5,0 Gew.-%, bezogen auf den Gesamtanteil an Gips in der Zusammensetzung.

Im Rahmen der vorliegenden Erfindung bezieht sich der Begriff "Recyclinggips" auf Gips, welcher bereits in der Produktion von gipshaltigen Artikeln verwendet wurde und aus besagten Artikeln zurückgewonnen wurde. Beispiele für gipshaltige Artikel, aus denen Recyclinggips gewonnen wird, sind Stuckgipse, Mörtelgipse, Maschinengipsputze, Putzgipse, Haftgipse, Fugengipse, Spachtelgipse, Isoliergipse, Estrichgipse, Fertigputzgipse, Marmorgipse sowie gipshaltige Fertigbauteile wie Gipskartonplatten, Gipsfaserplatten, gipshaltige Wandbauplatten, vliesummantelte Gipsplatten und gipshaltige Formkörper.

Recyclinggips enthält in der Regel die in den dem Herstellungsprozess zurückgeführten gipshaltigen Artikeln enthaltenen Additive. Beispielsweise sind in hydrophobierten Gipskartonplatten, welche für den Feuchtraumausbau verwendet werden, Siloxane oder Wachsemulsionen enthalten.

Der Recyclinggips gemäß der vorliegenden Erfindung enthält Siloxane. Bei Siloxanen handelt es sich um lineare oder cyclische Verbindungen der Formel

R¹₂₋₃R²₀₋₁Si-[O-Si¹R₂]ₙ-O-SiR¹₂₋₃,

wobei R¹ für Wasserstoff oder einen Alkylrest steht und R², wenn vorhanden, für eine Gruppe - O- steht, welche einen Ringschluss zwischen den endständigen Gruppen R¹₂₋₃R²₀₋₁Si- und SiR¹₂₋₃ bildet und n Werte von 0 bis 100 haben kann. Falls Rein Alkylrest ist, handelt es sich bevorzugt um einen linearen oder verzweigen C₁-C₁₀-Alkylrest. Bevorzugt handelt es sich bei R¹ um Methyl, Ethyl, n-Propyl, n-Butyl, iso-Butyl oder n-Hexyl. Besonders bevorzugt handelt es sich bei R¹ um Methyl.

Insbesondere enthält der Recyclinggips mindestens 0,01 Siloxane, mehr bevorzugt 0,02 bis 5,0 Gew.-% Siloxane, besonders bevorzugt 0,05 bis 2,0 Gew.-%, bezogen auf das Gesamtgewicht des Recyclinggips.

Dementsprechend enthält die erfindungsgemäße Gips-Zusammensetzung mindestens 0,01 Gew.-% Siloxane, mehr bevorzugt 0,01 bis 2,0 Gew.-% Siloxane, besonders bevorzugt 0,02 bis 1,0 Gew.-%, bezogen auf das Gesamtgewicht der Gips-Zusammensetzung.

Des Weiteren enthält die erfindungsgemäße Gips-Zuammensetzung mindestens 0,005 Gew.-% eines Schaumbildners, welcher mindestens ein alpha-Sulfofettsäuredisalz enthält, oder mindestens 0,007 Gew.-%, oder mindestens 0,01 Gew.-%, bezogen auf das Gesamtgewicht der Gips-Zusammensetzung.

In einer weiteren Ausführungsform enthält die erfindungsgemäße Gips-Zuammensetzung mindestens 0,002 Gew.-% eines Schaumbildners, welcher mindestens ein alpha-Sulfofettsäuredisalz enthält, mehr bevorzugt mindestens 0,003 Gew.-%, besonders bevorzugt mindestens 0,005 Gew.-%, bezogen auf das Gesamtgewicht der Gips-Zusammensetzung.

In einer Ausführungsform umfasst der Schaumbildner mindestens 30 Gew.-%, mindestens 45 Gew.-%, oder mindestens 60 Gew.-% des mindestens einen alpha-Sulfofettsäuredisalzes, bezogen auf das Gesamtgewicht des Schaumbildners. Besonders bevorzugt besteht der Schaumbildner aus dem mindestens einen alpha-Sulfofettsäuredisalz.

Bevorzugt umfasst der Schaumbildner mindestens 15 Gew.-%, mehr bevorzugt mindestens 25 Gew.-%, besonders bevorzugt mindestens 30 Gew.-% des mindestens einen alpha-Sulfofettsäuredisalzes, bezogen auf das Gesamtgewicht des Schaumbildners. Besonders bevorzugt besteht der Schaumbildner aus dem mindestens einen alpha-Sulfofettsäuredisalz.

Im Rahmen der vorliegenden Erfindung bezieht sich der Begriff "Schaumbildner" auf grenzflächenaktive Substanzen, die ein gewisses Filmbildungsvermögen haben und so die Erzeugung von Schaum in Flüssigkeiten fördern.

Bevorzugt handelt es sich bei dem mindestens einen alpha-Sulfofettsäuredisalz um eine Verbindung der Formel (I)

R¹CH(SO₃M¹)COOM² (I),

wobei R¹ ein linearer oder verzweigter Alkyl- oder Alkylenrest mit 6 bis 16 C-Atomen ist und M¹ und M² unabhängig voneinander für H, Li, Na, K, Ca/2, Mg/2, Ammonium oder Alkanolamin stehen. Besonders bevorzugte Alkanolamine sind dabei Monoethanolamin, Diethanolamin, Triethanolamin und Mono-Isopropanolamin.

Ferner gilt die Maßgabe, dass der Anteil der Verbindungen der Formel (I) in dem mindestens einen alpha-Sulfofettsäuredisalz, bei denen der Rest R¹ ein Alkylenrest ist, bei 3 Gew.-% oder weniger liegt, bezogen auf das Gesamtgewicht des mindestens einen alpha-Sulfofettsäuresalzes.

Bevorzugt ist R¹ ein gesättigter, linearer Alkylrest mit 8 bis 16 C-Atomen, mehr bevorzugt 9 bis 16 C-Atomen, besonders bevorzugt 10 bis 12 C-Atomen.

Besonders bevorzugt gilt die Maßgabe, dass der Anteil der Verbindungen der Formel (I) in dem mindestens einen alpha-Sulfofettsäuredisalz, bei denen der Rest R¹ ein Decyl- und/oder Dodecylrest ist, bei 90 Gew.-% oder mehr liegt, bezogen auf das Gesamtgewicht des mindestens einen alpha-Sulfofettsäuresalzes.

Besonders bevorzugt stehen M¹ und M² für Na.

Demnach handelt es sich bei dem mindestens einen alpha-Sulfofettsäuredisalz gemäß der vorliegenden Erfindung besonders bevorzugt um das Dinatriumsalz von 2-Sulfododecansäure, das Dinatriumsalz von 2-Sulfotetradecansäure oder Gemischen aus diesen. Besonders bevorzugt handelt es sich bei dem mindestens einen alpha-Sulfofettsäuredisalz um ein Gemisch aus dem Dinatriumsalz von 2-Sulfododecansäure und dem Dinatriumsalz von 2-Sulfotetradecansäure.

Die Verbindungen der Formel (I) können nach allen dem Fachmann einschlägig bekannten Methoden hergestellt werden. Eine besonders bevorzugte Methode der Herstellung ist dabei die Sulfierung der entsprechenden Carbonsäuren. Dabei wird die entsprechende Carbonsäure, insbesondere die entsprechende Fettsäure, mit gasförmigem Schwefeltrioxid umgesetzt, wobei das Schwefeltrioxid vorzugsweise in einer Menge eingesetzt wird, dass das molare Verhältnis von SO₃ zu Fettsäure im Bereich von 1,0 : 1 bis 1,1 : 1 liegt. Die so erhaltenen Rohprodukte, welche saure Sulfierprodukte darstellen, werden anschließend partiell oder vollständig neutralisiert, wobei eine vollständige Neutralisation mit wässriger NaOH bevorzugt ist. Falls erwünscht, können auch Reinigungsschritte vorgenommen werden.

Gemäß einer weiteren bevorzugten Ausführungsform enthält die erfindungsgemäße Gips-Zuammensetzung mindestens 0,002 Gew.-% mindestens eines Co-Tensids, mehr bevorzugt mindestens 0,003 Gew.-%, besonders bevorzugt mindestens 0,005 Gew.-%, bezogen auf das Gesamtgewicht der Gips-Zusammensetzung.

Bei dem mindestens einen Co-Tensid handelt sich um mindestens einen von alpha-Sulfofettsäuredisalzen verschiedenen Schaumbildner.

Bevorzugt handelt es sich bei dem mindestens einen Co-Tensid um einen Schaumbildner ausgewählt aus der Gruppe bestehend aus Alkylpolyglycosiden, Alkylamidobetainen, Glutamaten, Sulfoketonen, Sulfaten (u.a. Alkylsulfaten, Alkylethersulfaten), Isenthionaten, N-Acyl-Aminosäure-Verbindungen, Sulfoacetaten, Sulfonaten, Sulfosuccinaten, Tauraten, Betainen, Amphotensiden, Alkanolamiden, Aminoxiden, Carboxylaten, Alkylethoxylaten, Kationtensiden, kationischen Polymeren, Proteinhydrolysaten, Siliconen, Fettalkoholen, Protein-Derivaten, Bleichen von Disalzen, nicht ionischen Tensiden sowie Gemischen von diesen.

Bevorzugte Alkylpolyglycoside sind Verbindungen der Formel (II)

R²-O-[G]ₚ (II),

wobei R² für einen linearen oder verzweigten Alkyl- und/oder Alkylenrest mit 8 bis 18 C-Atomen, G für einen Zuckerrest mit 5 oder 6 C-Atomen und p für Zahlen zwischen 1 und 10 steht.

Bevorzugte Alkylamidobetaine sind Verbindungen der Formel (III)

R³-CO-NH-(CH₂)_{y}-N⁺(CH₃)₂-CH₂-COO⁻ (III),

wobei R³ für einen linearen oder verzweigten Alkyl- oder Alkylenrest mit 7 bis 19 C-Atomen steht und y eine ganze Zahl im Bereich 2 bis 4 ist.

Bei den bevorzugten N-Acyl-Aminosäure-Verbindungen handelt es sich bevorzugt um N-Acyl-Glutaminsäure-Verbindungen der Formel (IV)

M³OOC-CH₂-CH₂-CH(NH-CO-R⁴)-COOM⁴ (IV),

wobei R⁴ für einen linearen oder verzweigten Alkyl- oder Alkylenrest mit 7 bis 19 C-Atomen steht und die Reste M³ und M⁴ unabhängig voneinander ausgewählt sind aus der Gruppe bestehend aus H, Li, Na, K, Ca/2, Mg/2, Ammonium und Alkanolamine.

Gemäß einer weiteren Ausführungsform der vorliegenden Erfindung enthält die Zusammensetzung weiterhin mindestens ein Lösungsmittel. Bevorzugt enthält die Zusammensetzung 0,0001 Gew.-% bis 0,2 Gew.-% des mindestens einen Lösungsmittels, bezogen auf das Gesamtgewicht der Gips-Zusammensetzung.

Das Lösungsmittel ist bevorzugt ausgewählt aus der Gruppe bestehend aus Hexylenglycol, (2-Methyl-2,4-pentanediol), Ethanol, Propanal, n-Propylalkohol, 1-Pentanol, 2-Pentanol, 3-Pentanol, 2-Methyl-1-butanol, 2-Methyl-2-butanol, 3-Methyl-1-butanol, 3-Methyl-2-butanol, 2,2-Dimethyl-1-propanol, Essigsäure-n-propylester, Essigsäure-n-butylester, 1-Pentylacetat, 2-Pentylacetat, 3-Pentylacetat, Isopentylacetat, 1,1-Dimethylpropylacetat, 2-Methylbutylacetat, 2-Ethylhexylacetat, 2-Butoxyethanol, 2-(2-Butoxyethoxy)-ethanol, Triethylenglykolmonobutylether, 3,6,9,12-Tetraoxahexadecan-1-ol, 2-Hexoxy-1-ethanol, 2-(2-Hexyloxyethoxy)ethanol, 1-Methoxy-2-propanol, Methoxypropoxypropanol, 1-Butoxy-2-propanol, Di(propylenglycol)butylether, Tri(propylenglycol)butylether, 2-Butoxyethylacetat, 2-(2-Butoxyethoxy)ethylacetat, 1-Methoxy-2-propylacetat und Mischungen davon.

Die erfindungsgemäße Gips-Zusammensetzung kann den Schaumbildner in unaufgeschäumter Form oder als vorgefertigten Schaum enthalten. Verfahren zur Herstellung von vorgefertigtem Schaum sind dem Fachmann bekannt.

Der vorgefertigte Schaum hat bevorzugt eine Schaumdichte von 50 bis 180 g/L, mehr bevorzugt 60 bis 140 g/L, besonders bevorzugt 70 bis 120 g/L.

Die erfindungsgemäße Gips-Zusammensetzung umfasst bevorzugt mindestens 40,0 Gew.-%, mehr bevorzugt 45,0 bis 75,0 Gew.-%, besonders bevorzugt 50,0 bis 65,0 Gew.-% Gips, mindestens 0,005 Gew.-%, mehr bevorzugt mindestens 0,007 Gew.-%, besonders bevorzugt mindestens 0,01 Gew.-% des Schaumbildners, welcher mindestens ein alpha-Sulfofettsäuredisalz umfasst, optional mindestens 0,002 Gew.-%, mehr bevorzugt mindestens 0,003 Gew.-%, besonders bevorzugt mindestens 0,005 Gew.-% des mindestens einen Co-Tensids, optional mindestens 0,0001 Gew.-%, vorzugsweise von 0,0005 Gew.-% bis 0,2 Gew.-% mindestens eines Lösungsmittels und 20,0 bis 65,0 Gew.-%, mehr bevorzugt 30,0 bis 55,0 Gew.-%, besonders bevorzugt 35,0 bis 50,0 Gew.-% Wasser, bezogen auf das Gesamtgewicht der Gips-Zusammensetzung.

In einer weiteren Ausführungsform umfasst die erfindungsgemäße Gips-Zusammensetzung bevorzugt mindestens 40,0 Gew.-%, mehr bevorzugt 45,0 bis 75,0 Gew.-%, besonders bevorzugt 50,0 bis 65,0 Gew.-% Gips, mindestens 0,002 Gew.-%, mehr bevorzugt mindestens 0,003 Gew.-%, besonders bevorzugt mindestens 0,005 Gew.-% des Schaumbildners, welcher mindestens ein alpha-Sulfofettsäuredisalz umfasst, optional mindestens 0,001 Gew.-%, mehr bevorzugt mindestens 0,002 Gew.-%, besonders bevorzugt mindestens 0,003 Gew.-% des mindestens einen Co-Tensids, optional mindestens 0,0001 Gew.-%, vorzugsweise von 0,0005 Gew.-% bis 0,2 Gew.-% mindestens eines Lösungsmittels und 20,0 bis 65,0 Gew.-%, mehr bevorzugt 30,0 bis 55,0 Gew.-%, besonders bevorzugt 35,0 bis 50,0 Gew.-% Wasser, bezogen auf das Gesamtgewicht der Gips-Zusammensetzung.

Dementsprechend hat die erfindungsgemäße Gips-Zusammensetzung bevorzugt einen Wassergipswert von 0,3 bis 1,5, mehr bevorzugt von 0,5 bis 1,0, besonders bevorzugt von 0,7 bis 0,8.

Des Weiteren kann die erfindungsgemäße Gips-Zusammensetzung durch die Zugabe von Additiven modifiziert werden. Typischerweise enthält eine Gips-Zusammensetzung Additive, welche das Fließverhalten oder den Aushärtungsprozess beeinflussen. Beispielsweise kann die erfindungsgemäße Gips-Zusammensetzung ein oder mehrere Additive enthalten, die ausgewählt sind aus der Gruppe bestehend aus Celluloseethern, Löschkalk, mineralischen Additiven, Aggregaten mit geringer Dichte, Fasern, Beschleunigern, Verdickungsmitteln, Verzögerern, Luftporenbildnern, Schäumungsmitteln, Quellmitteln, Füllstoffen, Polyacrylaten, Dispersionsmitteln, Fließmitteln, Suberabsorbern und Stabilisatoren.

Demnach umfasst die erfindungsgemäße Gips-Zusammensetzung, mehr bevorzugt besteht aus, mindestens 40,0 Gew.-%, mehr bevorzugt 45,0 bis 70,0 Gew.-%, besonders bevorzugt 50,0 bis 65,0 Gew.-% Gips, mindestens 0,005 Gew.-%, mehr bevorzugt mindestens 0,007 Gew.-%, besonders bevorzugt mindestens 0,01 Gew.-% des Schaumbildners welcher mindestens ein alpha-Sulfofettsäuredisalz umfasst, optional mindestens 0,002 Gew.-%, mehr bevorzugt mindestens 0,003 Gew.-%, besonders bevorzugt mindestens 0,005 Gew.-% des mindestens einen Co-Tensids, optional mindestens 0,0001 Gew.-%, vorzugsweise von 0,0005 Gew.-% bis 0,2 Gew.-% mindestens eines Lösungsmittels, 20,0 bis 65,0 Gew.-%, mehr bevorzugt 30,0 bis 55,0 Gew.-%, besonders bevorzugt 35,0 bis 50,0 Gew.-% Wasser und 0,0 bis 5,0 Gew.-%, mehr bevorzugt 0,0001 bis 3,0 Gew.-%, besonders bevorzugt 0,001 bis 1,0 Gew.-% Additive, bezogen auf bezogen auf das Gesamtgewicht der Gips-Zusammensetzung.

In einer bevorzugten Ausführungsform umfasst die erfindungsgemäße Gips-Zusammensetzung, mehr bevorzugt besteht aus, mindestens 40,0 Gew.-%, mehr bevorzugt 45,0 bis 70,0 Gew.-%, besonders bevorzugt 50,0 bis 65,0 Gew.-% Gips, mindestens 0,002 Gew.-%, mehr bevorzugt mindestens 0,003 Gew.-%, besonders bevorzugt mindestens 0,005 Gew.-% des Schaumbildners welcher mindestens ein alpha-Sulfofettsäuredisalz umfasst, optional mindestens 0,001 Gew.-%, mehr bevorzugt mindestens 0,002 Gew.-%, besonders bevorzugt mindestens 0,003 Gew.-% des mindestens einen Co-Tensids, optional mindestens 0,0001 Gew.-%, vorzugsweise von 0,0005 Gew.-% bis 0,2 Gew.-% mindestens eines Lösungsmittels, 20,0 bis 65,0 Gew.-%, mehr bevorzugt 30,0 bis 55,0 Gew.-%, besonders bevorzugt 35,0 bis 50,0 Gew.-% Wasser und 0,0 bis 5,0 Gew.-%, mehr bevorzugt 0,0001 bis 3,0 Gew.-%, besonders bevorzugt 0,001 bis 1,0 Gew.-% Additive, bezogen auf bezogen auf das Gesamtgewicht der Gips-Zusammensetzung.

Bevorzugt kann die erfindungsgemäße Gips-Zusammensetzung Verzögerer, Beschleuniger und/oder Fließmittel enthalten.

Im Rahmen der vorliegenden Erfindung bezieht sich der Begriff "Verzögerer" auf ein Additiv, welches den Aushärtungsprozess einer Gips-Zusammensetzung verlangsamt. Nicht limitierende Beispiele für Verzögerer sind Weinsäure, Zitronensäure sowie deren Salze, Gluconate, Proteinhydrolysat, Polykondensierte Aminosäure, Phosphate, Komplexbildner, Hydroxycarbonsäuren, Saccharide, Organophosphate, sowie Gemische aus diesen.

Im Rahmen der vorliegenden Erfindung bezieht sich der Begriff "Beschleuniger" auf ein Additiv, welches den Aushärtungsprozess einer Gips-Zusammensetzung beschleunigt. Nicht limitierende Beispiele für Beschleuniger sind K₂SO₄ sowie fein gemahlenes Dihydrat.

Im Rahmen der vorliegenden Erfindung bezieht sich der Begriff "Fließmittel" auf ein Additiv, welches das Fließverhalten einer Gips-Zusammensetzung beeinflusst. Geeignete Fließmittel für die erfindungsgemäße Gips-Zusammensetzung sind Fließmittel auf Basis von Naphthalinsulfonat, Melaminsulfonat, Ligninsulfonat, Ketonharze, Polyarylether und Polycarboxylatether.

Besonders bevorzugt enthält die erfindungsgemäße Gips-Zusammensetzung 0,0001 bis 1,0 Gew.-% eines Verzögerers und/oder 0,01 bis 2,0 Gew.-% eines Fließmittels.

Demnach umfasst die erfindungsgemäße Gips-Zusammensetzung, mehr bevorzugt besteht aus, mindestens 40,0 Gew.-%, mehr bevorzugt 45,0 bis 70,0 Gew.-%, besonders bevorzugt 50,0 bis 65,0 Gew.-% Gips, mindestens 0,005 Gew.-%, mehr bevorzugt mindestens 0,007 Gew.-%, besonders bevorzugt mindestens 0,01 Gew.-% des Schaumbildners, welcher mindestens ein alpha-Sulfofettsäuredisalz umfasst, optional mindestens 0,002 Gew.-%, mehr bevorzugt mindestens 0,003 Gew.-%, besonders bevorzugt mindestens 0,005 Gew.-% des mindestens einen Co-Tensids, optional mindestens 0,0001 Gew.-%, vorzugsweise von 0,0005 Gew.-% bist 0,2 Gew.-% mindestens eines Lösungsmittels und 20,0 bis 65,0 Gew.-%, mehr bevorzugt 30,0 bis 55,0 Gew.-%, besonders bevorzugt 35,0 bis 50,0 Gew.-% Wasser, 0,0001 bis 1,0 Gew.-% eines Verzögerers und 0,01 bis 2,0 Gew.-% eines Fließmittels und 0,0 bis 5,0 Gew.-%, mehr bevorzugt 0,0001 bis 3,0 Gew.-%, besonders bevorzugt 0,001 bis 1,0 Gew.-% Additive, bezogen auf bezogen auf das Gesamtgewicht der Gips-Zusammensetzung.

In einer bevorzugten Ausführungsform umfasst die erfindungsgemäße Gips-Zusammensetzung, mehr bevorzugt besteht aus, mindestens 40,0 Gew.-%, mehr bevorzugt 45,0 bis 70,0 Gew.-%, besonders bevorzugt 50,0 bis 65,0 Gew.-% Gips, mindestens 0,002 Gew.-%, mehr bevorzugt mindestens 0,003 Gew.-%, besonders bevorzugt mindestens 0,005 Gew.-% des Schaumbildners, welcher mindestens ein alpha-Sulfofettsäuredisalz umfasst, optional mindestens 0,001 Gew.-%, mehr bevorzugt mindestens 0,002 Gew.-%, besonders bevorzugt mindestens 0,003 Gew.-% des mindestens einen Co-Tensids, optional mindestens 0,0001 Gew.-%, vorzugsweise von 0,0005 Gew.-% bis 0,2 Gew.-% mindestens eines Lösungsmittels und 20,0 bis 65,0 Gew.-%, mehr bevorzugt 30,0 bis 55,0 Gew.-%, besonders bevorzugt 35,0 bis 50,0 Gew.-% Wasser, 0,0001 bis 1,0 Gew.-% eines Verzögerers und 0,01 bis 2,0 Gew.-% eines Fließmittels und 0,0 bis 5,0 Gew.-%, mehr bevorzugt 0,0001 bis 3,0 Gew.-%, besonders bevorzugt 0,001 bis 1,0 Gew.-% Additive, bezogen auf bezogen auf das Gesamtgewicht der Gips-Zusammensetzung.

Die Nassdichte der erfindungsgemäßen Gips-Zusammensetzung ist bevorzugt kleiner als 1400 kg/m³, mehr bevorzugt kleiner als 1250 kg/m³, besonders bevorzugt kleiner als 1100 kg/m³.

Die vorliegende Erfindung betrifft weiterhin Stuckgipse, Mörtelgipse, Maschinengipsputze, Putzgipse, Haftgipse, Fugengipse, Spachtelgipse, Isoliergipse, Estrichgipse, Fertigputzgipse und Marmorgipse, welche die erfindungsgemäße wässrige Gips-Zusammensetzung enthalten.

Die vorliegende Erfindung betrifft weiterhin einen Artikel, welcher aus der erfindungsgemäßen Gips-Zusammensetzung hergestellt ist.

Bei besagtem Artikel handelt es sich bevorzugt um gipshaltige Fertigbauteile wie Gipskartonplatten, Gipsfaserplatten, gipshaltige Wandbauplatten, vliesummantelte Gipsplatten und gipshaltige Formkörper.

Besonders bevorzugt handelt es sich bei dem Artikel um eine Gipskartonplatte.

Des Weiteren betrifft die vorliegende Erfindung ein Verfahren zur Herstellung der erfindungsgemäßen wässrigen Gips-Zusammensetzung, umfassend
a) Bereitstellung eines Schaums aus einem Schaumbildner, welcher mindestens ein alpha-Sulfofettsäuredisalz umfasst,
b) Bereitstellung einer Zusammensetzung umfassend Wasser, Gips und optional Additive,
c) Einwirken von Scherkräften auf die in Schritt b) erhaltene Zusammensetzung unter Zugabe des Schaums aus Schritt a).

Gemäß Schritt a) des erfindungsgemäßen Verfahrens wird ein vorgefertigter Schaum aus einem Schaumbildner bereitgestellt, welcher mindestens ein alpha-Sulfofettsäuredisalz umfasst, um das Gewicht des Gipsartikels zu reduzieren. Der Schaum wird aus einem Gemisch enthaltend Schaumbildner, Luft und Wasser mit Hilfe eines geeigneten Schaumgenerators hergestellt. Verfahren zur Herstellung eines Schaums für eine Gips-Zusammensetzung sind dem Fachmann bekannt.

Vorzugsweise enthält das Gemisch aus dem der Schaum hergestellt wird weiterhin mindestens ein Lösungsmittel. Bevorzugt enthält das Gemisch aus dem der Schaum hergestellt wird 0,5 Gew.-% bis 30,0 Gew.-% des mindestens einen Lösungsmittels, bezogen auf das Gesamtgewicht des Schaums.

Das Lösungsmittel ist bevorzugt ausgewählt aus der Gruppe bestehend aus Hexylenglycol, (2-Methyl-2,4-pentanediol), Ethanol, Propanal, n-Propylalkohol, 1-Pentanol, 2-Pentanol, 3-Pentanol, 2-Methyl-1-butanol, 2-Methyl-2-butanol, 3-Methyl-1-butanol, 3-Methyl-2-butanol, 2,2-Dimethyl-1-propanol, Essigsäure-*n*-propylester, Essigsäure-*n*-butylester, 1-Pentylacetat, 2-Pentylacetat, 3-Pentylacetat, Isopentylacetat, 1,1-Dimethylpropylacetat, 2-Methylbutylacetat, 2-Ethylhexylacetat, 2-Butoxyethanol, 2-(2-Butoxyethoxy)-ethanol, Triethylenglykolmonobutylether, 3,6,9,12-Tetraoxahexadecan-1-ol, 2-Hexoxy-1-ethanol, 2-(2-Hexyloxyethoxy)ethanol, 1-Methoxy-2-propanol, Methoxypropoxypropanol, 1-Butoxy-2-propanol, Di(propylenglycol)butylether, Tri(propylenglycol)butylether, 2-Butoxyethylacetat, 2-(2-Butoxyethoxy)ethylacetat, 1-Methoxy-2-propylacetat und Mischungen davon.

Bei dem Schaumbildner, welcher mindestens ein alpha-Sulfofettsäuredisalz umfasst, handelt es sich bevorzugt um mindestens eine der oben genannten Verbindungen.

Gemäß Schritt b) wird eine Zusammensetzung bereitgestellt, welche Wasser, Gips und optional eines oder mehrere der oben genannten Additive enthält. Der Gips enthält einen Recyclinggips-Anteil von mindestens 0,5 Gew.-%, mehr bevorzugt mindestens 2,0 Gew.-%, besonders bevorzugt mindestens 5,0 Gew.-%, bezogen auf den Gesamtanteil an Gips in der Zusammensetzung.

Bei besagtem Recyclinggips handelt es sich um Siloxan-haltigen Recyclinggips wie oben beschrieben.

Durch Einwirken von Scherkräften auf die in Schritt b) erhaltene Zusammensetzung unter Zugabe des Schaums aus Schritt a) wird die erfindungsgemäße Gips-Zusammensetzung erhalten.

Außerdem betrifft die vorliegende Erfindung die Verwendung eines Schaumbildners, welcher mindestens ein alpha-Sulfofettsäuredisalz umfasst, zur Verminderung der Nassdichte einer wässrigen Gips-Zusammensetzung, welche einen Recyclinggips-Anteil von mindestens 0,5 Gew.-% aufweist, bezogen auf den Gesamtanteil an Gips in der Zusammensetzung.

Es ist insbesondere bevorzugt, dass es sich bei dem mindestens einem alpha-Sulfofettsäuredisalz um eine der oben genannten Verbindungen handelt.

Die nachfolgenden Beispiele sollen die Erfindung näher erläutern.

### Beispiele

### 1) Methoden

### Nassdichte

Zur Bestimmung der Nassdichte der Gips-Zusammensetzungen wurde das Verhältnis zwischen Gewicht und Volumen bestimmt, indem die jeweilige Zusammensetzung in ein Becherglas mit bekanntem Volumen gefüllt und anschließend gewogen wurde.

### Schaumdichte

Zur Bestimmung der Schaumdichte wurde das Verhältnis zwischen Gewicht und Volumen bestimmt, indem der jeweilige Schaum in ein Becherglas mit bekanntem Volumen gefüllt und anschließend gewogen wurde.

### 2) Herstellung Recyclinggips

Zur Herstellung eines Gipsbreis wurden 300 g Betahalbhydrat (Gewinnung aus der Rauchgasentschwefelung) in 201,0 g Wasser gegeben, welches 3,0 g Siloxan enthielt (Silres BS 94, Fa. Wacker Chemie) und für 15 Sekunden sumpfen gelassen. Anschließend wurde die Mischung für 30 Sekunden bei 285 U/min geschert und in eine Form gegossen. Nach 15 Minuten wurde der Probekörper aus der Form genommen und für eine Stunde in 150°C bei gesättigter Wasserdampfatmosphäre thermisch behandelt. Im Anschluss erfolgte die Lagerung der Probekörper bei 40°C bis zum Erreichen der Massenkonstanz.

Zur Weiterverarbeitung wurden die Proben mit einer Kugelmühle auf einen d₅₀ von ca. 10 µm vermahlen und danach für 5 Stunden bei 150 °C kalziniert. Nach Abkühlen auf Raumtemperatur konnte der Recyclinggips für die Anwendungsversuche eingesetzt werden.

### 3) Zusammensetzungen auf Basis von Fettalkylethersulfat-Tensiden

Zunächst wurde ein Schaum auf Basis von Fettalkylethersulfat hergestellt.

Hierzu wurde eine 0,40%-ige Tensidlösung (Vinapor GYP 2680, BASF) mittels Schaumgenerator basierend auf Rotor-/Statorsystem unter Zugabe von Druckluft in Schaum umgewandelt. Die eingestellte Schaumdichte betrug 75 g/L.

### Referenzmischung R1

Zur Herstellung des Gipsbreis wurden 350 g Betahalbhydrat (Gewinnung aus der Rauchgasentschwefelung) mit 0,035 g Verzögerer (Plastretard) und 3,3 g fein gemahlenem Dihydrat homogenisiert und anschließend in 234,2 g Wasser gegeben, welches 1,05 g Betanaphthalin-Fließmittel enthielt und für 15 Sekunden sumpfen gelassen. Anschließend wurde die Mischung für 30 Sekunden bei 1600 U/min geschert. Währenddessen wurde der Fettalkylethersulfat-basierte Schaum (18,2 g mit einer Dichte von 75 g/L) zugegeben. Die daraus resultierende Frischdichte der Referenzmischung 1 war 1050 kg/m³.

### Referenzmischung R2

Die Herstellung von Referenzmischung R2 erfolge analog zu Referenzmischung R1 mit dem Unterschied, dass 5% Betahalbhydrat durch Siloxan-haltigen Recyclinggips substituiert wurden. Die Nassdichte der Referenzmischung R2 stieg auf 1380 kg/m³ an.

### 4) Zusammensetzungen auf Basis von alpha-Sulfofettsäuredisalz-Tensiden

Zunächst wurde ein Schaum auf Basis eines alpha-Sulfofettsäuredisalzes hergestellt.

Hierzu wurde eine 0,40%-ige Tensidlösung auf Basis von C12/14-alpha-sulfo-Fettsäure-Na-Disalz mittels Schaumgenerator basierend auf Rotor-/Statorsystem unter Zugabe von Druckluft in Schaum umgewandelt. Die eingestellte Schaumdichte betrug 75 g/L.

### Referenzmischung R3

Zur Herstellung des Gipsbreis wurden 350 g Betahalbhydrat (Gewinnung aus der Rauchgasentschwefelung) mit 0,035 g Verzögerer (Plastretard) und 3,3 g fein gemahlenem Dihydrat homogenisiert und anschließend in 234,2 g Wasser gegeben, welches 1,05 g Betanaphthalin-Fließmittel enthielt und für 15 Sekunden sumpfen gelassen. Anschließend wurde die Mischung für 30 Sekunden bei 1600 U/min geschert. Währenddessen wurde der alpha-Sulfofettsäuredisalz-basierte Schaum (18,2 g mit einer Dichte von 75 g/L) zugegeben. Die daraus resultierende Frischdichte der Referenzmischung 1 war 1110 kg/m³.

### Beispiel E1 (erfinderisch)

Die Herstellung von Beispiel E1 erfolge analog zu Referenzmischung R3 mit dem Unterschied, dass 5% Betahalbhydrat durch Siloxan-haltigen Recyclinggips substituiert wurden. Die Nassdichte des erfindungsgemäßen Beispiels stieg auf lediglich 1170 kg/m³ an.

Die Zusammensetzungen und Eigenschaften der Referenzmischungen und des erfinderischen Beispiels sind in Tabelle 1 zusammengefasst.

**Tabelle 1 Zusammensetzung und Eigenschaften der Gipszusammensetzungen**

| | | **R1** | **R2** | **R3** | **E1** |
|---|---|---|---|---|---|
| Betahalbhydrat | [g] | 350,0 | 346,5 | 350,0 | 346,5 |
| Recyclinggips | [g] | | 3,5 | | 3,5 |
| Fein gemahlenes Dihydrat | [g] | 3,3 | 3,3 | 3,3 | 3,3 |
| Nassdichte | [kg/m³] | 1050 | 1380 | 1110 | 1170 |
| Nassdichteanstieg | [%] | - | 31,4 | - | 5,4 |

Die Ergebnisse zeigen, dass die Recyclinggips-haltigen Zusammensetzungen unter Verwendung von auf alpha-Sulfofettsäuredisalz-basierten Schäumen eine nur geringfügig höhere Nassdichte aufweisen als die Referenzmischungen, die keinen Recyclinggips enthalten, während bei Recyclinggips-haltigen Zusammensetzungen mit Fettalkylethersulfat-basierten Schäumen ein deutlicher Anstieg der Nassdichte zu beobachten ist.

## Patentansprüche

1. Wässrige Gips-Zusammensetzung, umfassend
i) mindestens 40,0 Gew.-% Gips, und
ii) mindestens 0,002 Gew.-%, vorzugsweise mindestens 0,005 Gew.-% eines Schaumbildners, welcher mindestens ein alpha-Sulfofettsäuredisalz umfasst,
bezogen auf das Gesamtgewicht der Gips-Zusammensetzung,
wobei der Gips einen Recyclinggips-Anteil von mindestens 0,5 Gew.-% aufweist, bezogen auf den Gesamtanteil an Gips in der Gips-Zusammensetzung,
**dadurch gekennzeichnet, dass** es sich bei dem Recyclinggips Anteil um Siloxan-haltigen Recyclinggips handelt.

2. Zusammensetzung nach Anspruch 1, wobei es sich bei dem mindestens einen alpha-Sulfofettsäuredisalz um eine Verbindung der Formel (I) handelt
R¹CH(SO₃M¹)COOM² (I),
wobei R¹ ein linearer oder verzweigter Alkyl- oder Alkylenrest mit 6 bis 16 C-Atomen ist und M¹ und M² unabhängig voneinander für H, Li, Na, K, Ca/2, Mg/2, Ammonium oder Alkanolamin stehen.

3. Zusammensetzung nach Anspruch 2, wobei R¹ ein gesättigter, linearer Alkylrest mit 8 bis 16 C-Atomen ist.

4. Zusammensetzung nach Anspruch 2 oder 3, wobei M¹ und M² für Na stehen.

5. Zusammensetzung nach einem der vorherigen Ansprüche, weiterhin umfassend mindestens 0,001 Gew.-% mindestens eines von alpha-Sulfofettsäuredisalzen verschiedenen Co-Tensids.

6. Zusammensetzung nach Anspruch 5, wobei das mindestens eine Co-Tensid ausgewählt ist aus der Gruppe bestehend aus Alkylpolyglycosiden, Alkylamidobetainen, Glutamaten, Sulfoketonen, Sulfaten, Isenthionaten, N-Acyl-Aminosäure-Verbindungen, Sulfoacetaten, Sulfonaten, Sulfosuccinaten, Tauraten, Betainen, Amphotensiden, Alkanolamiden, Aminoxiden, Carboxylaten, Alkylethoxylaten, Kationtensiden, kationischen Polymeren, Proteinhydrolysaten, Siliconen, Fettalkoholen, Protein-Derivaten, Bleichen von Disalzen, nicht ionischen Tensiden sowie Gemischen von diesen.

7. Zusammensetzung nach einem der vorherigen Ansprüche, weiterhin umfassend mindestens ein Lösungsmittel.

8. Zusammensetzung nach einem der vorherigen Ansprüche, weiterhin umfassend ein oder mehrere Additive ausgewählt sind aus der Gruppe bestehend aus Celluloseethern, Löschkalk, Stärke, modifizierter Stärke, Hydrophobierungsmitteln, mineralischen Additiven, Aggregaten mit geringer Dichte, Fasern, Beschleunigern, Verdickungsmitteln, Verzögerern, Luftporenbildnern, Schäumungsmitteln, Quellmitteln, Füllstoffen, Polyacrylaten, Dispersionsmitteln, Fließmitteln, Superabsorbern und Stabilisatoren.

9. Zusammensetzung nach einem der vorherigen Ansprüche, weiterhin umfassend 0,0001 bis 1,0 Gew.-% eines Verzögerers und/oder 0,01 bis 2,0 Gew.-% eines Fließmittels.

10. Stuckgipse, Mörtelgipse, Maschinengipsputze, Putzgipse, Haftgipse, Fugengipse, Spachtelgipse, Isoliergipse, Estrichgipse, Fertigputzgipse, Marmorgipse umfassend die wässrige Zusammensetzung nach einem der vorherigen Ansprüche 1 bis 9.

11. Artikel, hergestellt aus der wässrigen Zusammensetzung nach einem der vorherigen Ansprüche 1 bis 9.

12. Artikel nach Anspruch 11, wobei es sich bei dem Artikel um gipshaltige Fertigbauteile wie Gipskartonplatten, Gipsfaserplatten, gipshaltige Wandbauplatten, vliesummantelte Gipsplatten und gipshaltige Formkörper handelt.

13. Verfahren zur Herstellung einer wässrigen Gips-Zusammensetzung gemäß einem der Ansprüche 1 bis 9, umfassend
a) Bereitstellung eines Schaums aus einem Schaumbildner, welcher mindestens ein alpha-Sulfofettsäuredisalz umfasst,
b) Bereitstellung einer Zusammensetzung umfassend Wasser, Gips und optional Additive,
c) Einwirken von Scherkräften auf die in Schritt b) erhaltene Zusammensetzung unter Zugabe des Schaums aus Schritt a).

14. Verwendung eines Schaumbildners, welcher mindestens ein alpha-Sulfofettsäuredisalz umfasst, zur Verminderung der Nassdichte einer wässrigen Gips-Zusammensetzung, welche einen Recyclinggips-Anteil von mindestens 0,5 Gew.-% aufweist, bezogen auf den Gesamtanteil an Gips in der Zusammensetzung;
**dadurch gekennzeichnet, dass** es sich bei dem Recyclinggips-Anteil um Siloxan-haltigen Recyclinggips handelt.

15. Verwendung nach Anspruch 14, wobei es sich bei dem mindestens einem alpha-Sulfofettsäuredisalz um eine Verbindung nach einem der Ansprüche 2 bis 5 handelt.

## Claims

1. Aqueous gypsum composition comprising
i) at least 40.0 wt.% gypsum, and
ii) at least 0.002 wt.%, preferably at least 0.005 wt.% of a foaming agent which comprises at least one alpha-sulfo fatty acid disalt,
based on the total weight of the gypsum composition,
the gypsum having a recycled-gypsum content of at least 0.5 wt.%, based on the total content of gypsum in the gypsum composition,
**characterized in that** the recycled-gypsum content is siloxane-containing recycled gypsum.

2. Composition according to claim 1, wherein the at least one alpha-sulfo fatty acid disalt is a compound of formula (I)
R¹CH(SO₃M¹)COOM² (I),
where R¹ is a linear or branched alkyl or alkylene group having 6 to 16 C atoms and M¹ and M² independently represent H, Li, Na, K, Ca/2, Mg/2, ammonium or alkanolamine.

3. Composition according to claim 2, where R¹ is a saturated, linear alkyl group having 8 to 16 C atoms.

4. Composition according to claim 2 or 3, where M¹ and M² represent Na.

5. Composition according to any of the preceding claims, further comprising at least 0.001 wt.% of at least one cosurfactant other than alpha-sulfo fatty acid disalts.

6. Composition according to claim 5, wherein the at least one cosurfactant is selected from the group consisting of alkyl polyglycosides, alkyl amido betaines, glutamates, sulfoketones, sulfates, isenethionates, N-acyl amino acid compounds, sulfoacetates, sulfonates, sulfosuccinates, taurates, betaines, amphoteric surfactants, alkanolamides, amine oxides, carboxylates, alkyl ethoxylates, cationic surfactants, cationic polymers, protein hydrolysates, silicones, fatty alcohols, protein derivatives, bleaches of disalts, nonionic surfactants, and mixtures thereof.

7. Composition according to any of the preceding claims, further comprising at least one solvent.

8. Composition according to any of the preceding claims, further comprising one or more additives selected from the group consisting of cellulose ethers, slaked lime, starch, modified starch, hydrophobic agents, mineral additives, low density aggregates, fibers, accelerators, thickeners, retarders, air-entraining agents, foaming agents, swelling agents, fillers, polyacrylates, dispersants, flow agents, superabsorbers, and stabilizers.

9. Composition according to any of the preceding claims, further comprising 0.0001 to 1.0 wt.% of a retarder and/or 0.01 to 2.0 wt.% of a flow agent.

10. Stucco gypsums, mortar gypsums, machine gypsum plasters, plaster gypsums, adhesive gypsums, joint gypsums, filler gypsums, insulating gypsums, screed gypsums, ready-mixed plaster gypsums, marble gypsums comprising the aqueous composition according to any of the preceding claims 1 to 9.

11. Article made from the aqueous composition according to any of the preceding claims 1 to 9.

12. Article according to claim 11, wherein the article comprises gypsum-containing prefabricated components such as gypsum plasterboards, gypsum fiberboards, gypsum-containing wallboards, fleece-coated gypsum boards and gypsum-containing moldings.

13. Process for producing an aqueous gypsum composition according to any of claims 1 to 9, comprising
a) preparing a foam from a foaming agent which comprises at least one alpha-sulfo fatty acid disalt,
b) preparing a composition comprising water, gypsum, and optional additives,
c) subjecting the composition obtained in step b) to shear forces while adding the foam from step a).

14. Use of a foaming agent comprising at least one alpha-sulfo fatty acid disalt for reducing the wet density of an aqueous gypsum composition having a recycled-gypsum content of at least 0.5 wt.%, based on the total content of gypsum in the composition;
**characterized in that** the recycled-gypsum content is siloxane-containing recycled gypsum.

15. Use according to claim 14, wherein the at least one alpha-sulfo fatty acid disalt is a compound according to any of claims 2 to 5.

## Revendications

1. Composition aqueuse de gypse, comprenant
i) au moins 40,0 % en poids de gypse ; et
ii) au moins 0,002 % en poids, de préférence au moins 0,005 % en poids d'un agent moussant qui comprend au moins un disel d'acide gras alpha-sulfo,
par rapport au poids total de la composition de gypse,
dans laquelle le gypse présente une teneur en gypse recyclé d'au moins 0,5 % en poids par rapport à la teneur totale en gypse dans la composition de gypse,
**caractérisée en ce que** la teneur en gypse recyclé est du gypse recyclé contenant du siloxan.

2. Composition selon la revendication 1, dans laquelle l'au moins un disel d'acide gras alpha-sulfo est un composé de formule (I)
R¹CH(SO₃M¹)COOM² (I),
dans laquelle R¹ est un radical alkyle ou alkylène linéaire ou ramifié comportant 6 à 16 atomes C et M¹ et M² représentent indépendamment l'un de l'autre H, Li, Na, K, Ca/2, Mg/2, l'ammonium ou une alcanolamine.

3. Composition selon la revendication 2, dans laquelle R¹ est un radical alkyle linéaire saturé comportant 8 à 16 atomes C.

4. Composition selon la revendication 2 ou 3, dans laquelle M¹ et M² représentent Na.

5. Composition selon l'une des revendications précédentes, comprenant en outre au moins 0,001 % en poids d'au moins un agent co-tensioactif autre que des disels d'acides gras alpha-sulfo.

6. Composition selon la revendication 5, dans laquelle ledit au moins un agent co-tensioactif est choisi dans le groupe constitué des alkylpolyglycosides, des alkylamidobétaïnes, des glutamates, des sulfocétones, des sulfates, des isenthionates, des composés N-acylaminoacides, des sulfoacétates, des sulfonates, des sulfosuccinates, des taurates, bétaïnes, des agents tensioactifs amphotères, des alcanolamides, des aminoxydes, des carboxylates, des alkyléthoxylates, des agents tensioactifs cationiques, des polymères cationiques, des hydrolysats de protéines, des silicones, des alcools gras, des dérivés de protéines, du blanchiment des disels, des agents tensioactifs non ioniques ainsi que des mélanges de ceux-ci.

7. Composition selon l'une des revendications précédentes, comprenant en outre au moins un solvant.

8. Composition selon l'une des revendications précédentes, comprenant en outre un ou plusieurs additifs choisis dans le groupe constitué des éthers de cellulose, de la chaux éteinte, de l'amidon, de l'amidon modifié, des agents hydrophobes, des additifs minéraux, des agrégats comportant une faible densité, des fibres, des accélérateurs, des épaississants, des retardateurs, des entraîneurs d'air, des agents moussants, des agents gonflants, des charges, des polyacrylates, des dispersants, des agents d'écoulement, des superabsorbants et des stabilisants.

9. Composition selon l'une des revendications précédentes, comprenant en outre de 0,0001 à 1,0 % en poids d'un retardateur et/ou de 0,01 à 2,0 % en poids d'un agent d'écoulement.

10. Gypses pour stuc, gypses pour mortier, gypses pour machine, gypses pour enduit, gypses adhésifs, gypses pour joints, gypses pour mastic, gypses isolants, gypses pour chape, gypses pour enduit fini, gypses pour marbre comprenant la composition aqueuse selon l'une des revendications précédentes 1 à 9.

11. Article fabriqué à partir de la composition aqueuse selon l'une des revendications précédentes 1 à 9.

12. Article selon la revendication 11, dans lequel l'article est des éléments de construction préfabriqués contenant du gypse, tels que des plaques de gypse cartonné, des plaques de gypse fibrées, des panneaux muraux contenant du gypse, des plaques de gypse enrobées de non-tissé et des corps moulés contenant du gypse.

13. Procédé pour la fabrication d'une composition aqueuse de gypse selon l'une des revendications 1 à 9, comprenant
a) la fourniture d'une mousse à partir d'un agent moussant qui comprend au moins un disel d'acide gras alpha-sulfo,
b) la fourniture d'une composition comprenant de l'eau, du gypse et, éventuellement, des additifs,
c) l'application de forces de cisaillement à la composition obtenue à l'étape b), en ajoutant la mousse obtenue à l'étape a).

14. Utilisation d'un agent moussant comprenant au moins un disel d'acide gras alpha-sulfo pour la réduction de la densité humide d'une composition aqueuse de gypse présentant une teneur en gypse recyclé d'au moins 0,5 % en poids, par rapport à la teneur totale en gypse dans la composition ;
**caractérisée en ce que** la teneur en gypse recyclé est du gypse recyclé contenant du siloxan.

15. Utilisation selon la revendication 14, dans laquelle l'au moins un disel d'acide gras alpha-sulfo est un composé selon l'une des revendications 2 à 5.
